# EUROPEAN PATENT APPLICATION

(11) **EP 4 827 031 A1**
(43) Date of publication of application: **21.10.2026**
(21) Application number: 24902520.6
(22) Date of filing: 21.11.2024
(51) Int. Cl.: H04L 5/00

(54) **COMMUNICATION METHOD AND APPARATUS**

(30) Priority: 14.12.2023 CN 202311725774
(71) Applicant: Huawei Technologies Co., Ltd., Shenzhen, Guangdong 518129 (CN)
(72) Inventor: WANG, Xiaona, Shenzhen, Guangdong 518129 (CN); LIU, Fengwei, Shenzhen, Guangdong 518129 (CN)
(74) Representative: Huawei European IPR
(86) International application number: PCT/CN2024/133634
(87) International publication number: WO 2025/124098

(57) **Abstract**

Embodiments of this application provide a communication method and apparatus, to increase the probability that a network device correctly demodulates a data signal in antenna switching scenarios. The method includes: sending a reference signal and/or a data signal to a network device in a first manner when a first resource and a second resource meet a first condition, where the first condition indicates an insufficient time domain resource for antenna switching, the first resource is a time-frequency domain resource for sending the reference signal, and the second resource is a time-frequency domain resource for sending the data signal, and the first manner includes one or more of the following: sending the reference signal and the data signal through a same port; sending the reference signal and the data signal through different ports, and skipping performing resource mapping on a portion of the first resource and/or the second resource; sending the data signal without sending the reference signal; or sending the reference signal without sending the data signal.

## Description

### CROSS-REFERENCE TO RELATED APPLICATIONS

This application claims priority to Chinese Patent Application No. 202311725774.6, filed with the China National Intellectual Property Administration on December 14, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A sounding reference signal may be used to measure a channel. For example, a network device may perform channel measurement based on a reference signal sent by a terminal device, to obtain channel state information (channel state information, CSI). When uplink-download channel reciprocity is satisfied, the channel state information may be used to schedule uplink resources, or calculate a weight for downlink transmission, or the like.

When a downlink receiving capability of the terminal device is greater than an uplink transmitting capability, for example, when a quantity of downlink receive antenna ports is greater than a quantity of uplink transmit antenna ports, the terminal device needs to send a reference signal in an antenna switching (antenna switching, AS) manner, to obtain channel state information of all the downlink receive antenna ports, so as to more accurately direct downlink resource scheduling. Therefore, when the terminal device sends a reference signal in the antenna switching manner, the network device may configure, for the terminal device, a plurality of resources (for example, time-frequency domain resources) used to send the reference signal, so that the network device obtains channel state information corresponding to a plurality of antenna ports.

However, in antenna switching scenarios, after sending a reference signal to the network device, the terminal device may further send a data signal. If an antenna port used to send the data signal is different from a port used to send the reference signal, a time domain resource used for antenna switching may be insufficient, resulting in a relatively low probability that the network device correctly demodulates the data signal.

### SUMMARY

Embodiments of this application provide a communication method and apparatus, to increase the probability that a network device correctly demodulates a data signal in antenna switching scenarios.

According to a first aspect, a communication method is provided. The method may be performed by a terminal device, or may be performed by a chip system. The chip system can implement a function of the terminal device. The method includes: sending a reference signal and/or a data signal to a network device in a first manner when a first resource and a second resource meet a first condition, where the first condition indicates that an insufficient time domain resource for antenna switching, the first resource is a time-frequency domain resource for sending the reference signal, and the second resource is a time-frequency domain resource for sending the data signal, and the first manner includes one or more of the following: sending the reference signal and the data signal through a same port; sending the reference signal and the data signal through different ports, and skipping performing resource mapping on a portion of the first resource and/or the second resource; sending the data signal without sending the reference signal; or sending the reference signal without sending the data signal.

In this embodiment of this application, when the terminal device sends the reference signal and/or the data signal to the network device, if the time domain resource used for antenna switching is insufficient, the terminal device may not perform antenna switching, that is, send the reference signal and the data signal to the network device through a same port, so that the network device can correctly demodulate the data signal. Alternatively, the terminal device may send the reference signal and the data signal through different ports, and may not perform resource mapping on a portion of the first resource and/or the second resource when sending the reference signal and the data signal, that is, the portion of resources is not used to send the reference signal and/or the data signal, so that the terminal device has sufficient time to complete antenna switching. In addition, both the first resource and the second resource may send the signals through a proper antenna port, so that the network device can correctly demodulate the data signal. Alternatively, the terminal device may send the data signal to the network device, and may not send the reference signal, so that the network device can correctly demodulate the data signal, and this helps improve utilization of an uplink subframe. Alternatively, the terminal device may send the reference signal to the network device, and may not send the data signal, so as to reduce the probability that the network device incorrectly demodulates the data signal, and help improve the accuracy of obtaining channel state information of all the downlink ports by the network device.

In a possible implementation, that the first resource and the second resource meet the first condition includes: a time-domain interval between the first resource and the second resource is less than a first threshold. If the time-domain interval between the first resource and the second resource is less than the first threshold, it indicates that the terminal device may not have time to perform antenna switching to send the data signal. Therefore, it may be considered that the first resource and the second resource meet the first condition.

In a possible implementation, the first manner is predefined in a protocol, or is indicated by the network device by using first indication information, and a manner of carrying the first indication information includes one or more of radio resource control RRC, a media access control control element MAC-CE, and downlink control information DCI. The manner in which the terminal device sends the reference signal and the data signal to the network device is predefined in the protocol or is indicated by the network device, so that the network device can learn the manner in which the terminal device sends the reference signal and the data signal when the first resource and the second resource meet the first condition, thereby correctly demodulating the data signal, which helps increase the probability that the network device correctly demodulates the data signal.

In a possible implementation, the terminal device may further receive second indication information from the network device, where the second indication information indicates a location of a time-frequency domain resource , at which resource mapping is skipped, in the first resource and/or the second resource. The network device indicates a location at which resource mapping is skipped, so that resource utilization can be improved when it is ensured that time domain resources used for antenna switching are sufficient.

In a possible implementation, the second indication information includes a rate matching pattern.

In a possible implementation, the terminal device may further receive configuration information of the first resource and scheduling information of the second resource from the network device. That the network device configures, for the terminal device, the first resource for sending the reference signal and the second resource for sending the data signal complies with a provision of an existing protocol.

According to a second aspect, a communication method is provided. The method may be performed by a network device, or may be performed by a chip system. The chip system can implement a function of the network device. The method includes: sending first indication information to a terminal device, where the first indication information indicates to send a reference signal and/or a data signal in a first manner when a first resource and a second resource meet a first condition, the first condition indicates an insufficient time domain resource for antenna switching, the first resource is a time-frequency domain resource for sending the reference signal, and the second resource is a time-frequency domain resource for sending the data signal, and the first manner includes one or more of the following: sending the reference signal and the data signal through a same port; sending the reference signal and the data signal through different ports, and skipping performing resource mapping on a portion of the first resource and/or the second resource; sending the data signal without sending the reference signal; or sending the reference signal without sending the data signal.

In a possible implementation, that the first resource and the second resource meet the first condition includes: a time-domain interval between the first resource and the second resource is less than or equal to a first threshold.

In a possible implementation, a manner of carrying the first indication information includes one or more of radio resource control RRC, a media access control control element MAC-CE, and downlink control information DCI.

In a possible implementation, the method further includes: sending second indication information to the terminal device, where the second indication information indicates a location of a time-frequency domain resource, at which resource mapping is skipped, in the first resource and/or the second resource.

In a possible implementation, the second indication information includes a rate matching pattern.

In a possible implementation, the method further includes: sending resource configuration information of the first resource and resource scheduling information of the second resource to the terminal device.

According to a third aspect, an embodiment of this application provides a communication apparatus. The apparatus may be a terminal device, or may be a module (for example, a chip) used in the terminal device. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network device, or may be a module (for example, a chip) used in the network device. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus. The communication apparatus includes a communication interface and a processor, and optionally, further includes a memory. The memory is configured to store a computer program. The processor is coupled to both the memory and the communication interface. When the processor reads the computer program or instructions, the communication apparatus is enabled to perform the method performed by the terminal device according to the first aspect, or the communication apparatus is enabled to perform the method performed by the network device according to the second aspect.

According to a sixth aspect, an embodiment of this application provides a computer-readable storage medium. The computer-readable storage medium is configured to store a computer program. When the computer program is run on a computer, the computer is enabled to perform the method according to the first aspect or the second aspect.

According to a seventh aspect, an embodiment of this application provides a computer program product, including a computer program. When the computer program is run on a computer, the computer is enabled to perform the method according to the first aspect or the second aspect.

According to an eighth aspect, a chip system is provided, including a processor and an interface. The processor is configured to invoke instructions from the interface and run the instructions, to enable the chip system to implement the method according to the first aspect or the second aspect.

For beneficial effects of the second aspect to the eighth aspect, refer to the beneficial effects of the first aspect. Details are not described again.

### BRIEF DESCRIPTION OF DRAWINGS

FIG. 1A, FIG. 1B, and FIG. 1C are diagrams of several application scenarios used in an embodiment of this application;
FIG. 2A and FIG. 2B are diagrams of an antenna switching scenario;
FIG. 3 is a flowchart of a communication method according to an embodiment of this application;
FIG. 4A to FIG. 4C are structural diagrams of several rate matching patterns according to an embodiment of this application;
FIG. 5 is a diagram of an architecture of a communication system according to an embodiment of this application; and
FIG. 6 is a structural diagram of another communication apparatus according to an embodiment of this application.

### DESCRIPTION OF EMBODIMENTS

The following describes in detail embodiments of this application with reference to accompanying drawings. The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a fifth generation (5th generation, 5G) system or a new radio (new radio, NR) system, or may be applied to a future communication system or another similar communication system.

The technical solutions in embodiments of this application may be used in technical fields such as unmanned driving (unmanned driving), assisted driving (driver assistance, ADAS), intelligent driving (intelligent driving), connected driving (connected driving), intelligent network driving (Intelligent network driving), car sharing (car sharing), a smart/intelligent car (smart/intelligent car), a digital car (digital car), an unmanned car (unmanned car/driverless car/pilotless car/automobile), the Internet of vehicles (Internet of vehicles, IoV), a self-driving car (self-driving car/autonomous car), a cooperative vehicle infrastructure (cooperative vehicle infrastructure, CVIS), an intelligent transportation system (intelligent transport system, ITS), and vehicular communication (vehicular communication).

To make embodiments of the present invention clearer, the following collectively describes some content and concepts related to embodiments of the present invention.
(1) A terminal device is a device with a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communications (machine-to-machine/machine-type communications, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.
   In embodiments of this application, a communication apparatus configured to implement a function of the terminal device may be a terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, in this embodiment of this application, an example in which the terminal device is UE is used for description.
(2) A network device includes, for example, an access network device and/or a core network device. The access network device is a network-side device having a wireless transceiver function. The access network device may be an apparatus in a radio access network (radio access network, RAN) used to provide a wireless communication function for the terminal device, and is referred to as a RAN device. For example, the access network device may be a base station (base station), an evolved NodeB (evolved NodeB, which may be briefly referred to as an eNB or an e-NodeB) in a long term evolution (long term evolution, LTE) system or a long term evolution-advanced (long term evolution-advanced, LTE-A) system, a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be an access network device in an open access network (open RAN, ORAN) system, or the like. The access network device may alternatively be a macro base station, a micro base station (also referred to as a small cell), or an indoor base station, or may be a relay node, a donor node, or the like. The access network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a remote radio unit (remote radio unit, RRU), a Wi-Fi access point (access point, AP), a baseband unit pool (BBU pool) and an RRU in a cloud radio access network (cloud radio access network, CRAN), or the like. A specific technology and a specific device form that are used by the access network device are not limited in embodiments of this application.

In addition, the access network device may alternatively be a module or a unit that completes some functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU may complete functions of a radio resource control protocol and a packet data convergence protocol (packet data convergence protocol, PDCP) of the base station, and may further complete a function of a service data adaptation protocol (service data adaptation protocol, SDAP). The DU may complete functions of a radio link control layer and a medium access control (medium access control, MAC) layer of the base station, and may further complete some or all of functions of a physical layer. In different systems, the CU (or the CU-CP and the CU-UP), the DU, or the RU may have different names, but a person skilled in the art may understand their meanings. For example, in the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication system is used as an example, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.
(3) Air interface resource: In a cell, the base station and the UE may perform data transmission by using an air interface (user to Network interface UE, Uu) resource. The air interface resource may include a time domain resource and a frequency domain resource, and the time domain resource and the frequency domain resource may also be referred to as a time-frequency domain resource. The frequency domain resource may be located within a specified frequency range. The frequency range may also be referred to as a band (band) or a frequency band, and a width of the frequency domain resource may be referred to as a bandwidth (bandwidth, BW).
(4) Time-frequency domain resource: A time-frequency domain resource may be a resource grid, including time domain and frequency domain. For example, a time domain unit may be a symbol (symbol), and a frequency domain unit may be a subcarrier (subcarrier). A minimum resource unit in the resource grid may be referred to as a resource element (RE). A resource block (resource block, RB) may include one or more subcarriers in frequency domain. For example, 12 subcarriers may be included. A slot may include one or more symbols in the time domain. For example, a slot in NR may include 14 symbols (in the case of a cyclic prefix (cyclic prefix, CP)) or 12 symbols (in the case of an extended cyclic prefix). A frequency domain resource is usually in units of an orthogonal frequency division multiplexing (orthogonal frequency division multiplexing, OFDM) symbol, a sub-slot (sub-slot), a slot (slot), a subframe (subframe), or a frame (frame). The terms "time-frequency domain resource" and "resource" in embodiments of this application may be used interchangeably.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, names such as the first resource and the second resource do not indicate differences in content, sizes, priorities, importance, or the like of the two resources. In addition, step numbers in embodiments described in embodiments of this application are merely intended to distinguish between different steps, and in some cases are not used to limit a sequence of the steps.

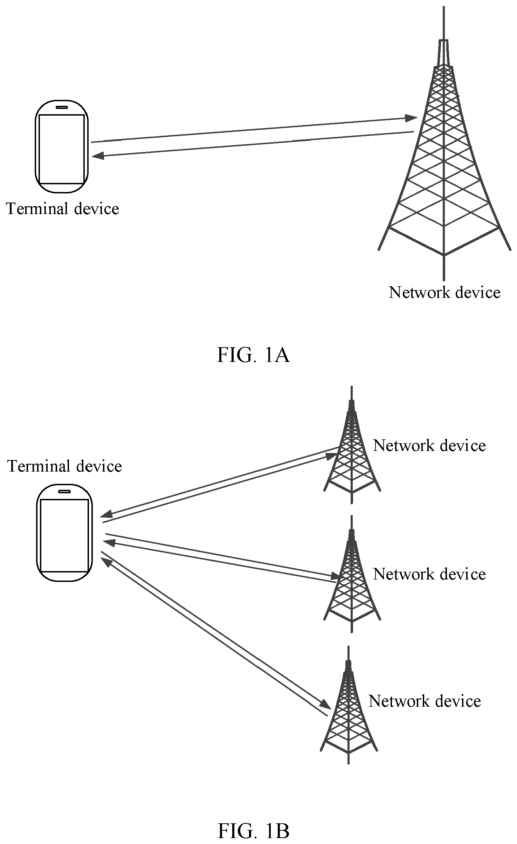

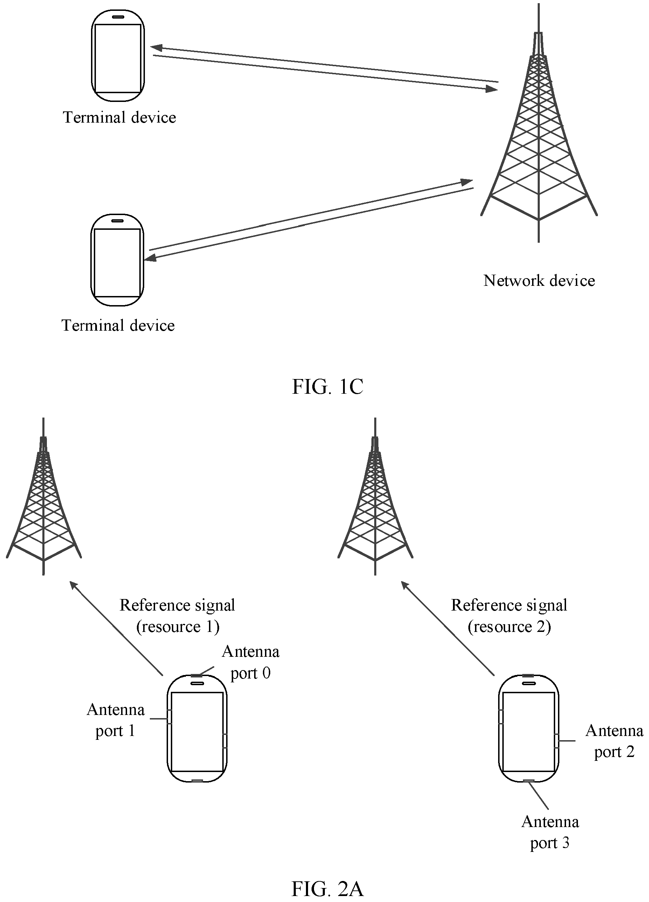

Refer to FIG. 1A, which is a diagram of an application scenario to which an embodiment of this application is applicable. FIG. 1A includes a terminal device and a network device. The terminal device and the network device may communicate with each other. Optionally, the application scenario shown in FIG. 1A may alternatively include a plurality of terminal devices and a plurality of network devices. One terminal device may communicate with a plurality of network devices, and one network device may also communicate with a plurality of terminal devices. For example, refer to FIG. 1B and FIG. 1C. FIG. 1B shows a scenario in which one terminal device may communicate with three network devices, and FIG. 1C shows a scenario in which one network device communicates with two terminal devices.

The terminal device may send a reference signal to the network device, and the network device may perform channel measurement based on the reference signal. In a system (for example, a TDD system) having a channel reciprocity characteristic, the network device may further schedule an uplink resource and calculate a weight of downlink transmission based on a channel measurement result. However, in the system having a channel reciprocity characteristic, if a quantity of uplink antennas (which may also be referred to as, for example, transmit (transmit, T) antennas) configured for the terminal device is less than a quantity of downlink antennas (which may also be referred to as, for example, receive (receive, R) antennas) configured for the terminal device, the network device may configure, for the terminal device, a plurality of resources used to send the reference signal, and the terminal device sends, through different antenna ports, the reference signals sent on different resources.

Refer to FIG. 2A. An example in which an antenna mode supported by a terminal device is 2T4R is used. The terminal device includes four antenna ports: an antenna port 0, an antenna port 1, an antenna port 2, and an antenna port 3. A network device configures two resources for the terminal device: a resource 1 and a resource 2. The terminal device may send a reference signal to the network device on the resource 1 through the antenna port 0 and the antenna port 1, and send a reference signal to the network device on the resource 2 through the antenna port 2 and the antenna port 3. D is a downlink (down) subframe, S is a special (special) subframe, and U is an uplink (up) subframe.

Optionally, the terminal device needs time to perform antenna switching. Therefore, when configuring the resource 1 and the resource 2, the network device may configure a guard interval of Y time domain symbols between the resource 1 and the resource 2, and the terminal device does not transmit any signal on the Y time domain symbols. For example, if the resource 1 is earlier than the resource 2 in the time domain, there is an interval of Y time domain symbols between a 1^{st} time domain symbol occupied by the resource 2 configured by the network device and a last time domain symbol occupied by the resource 1.

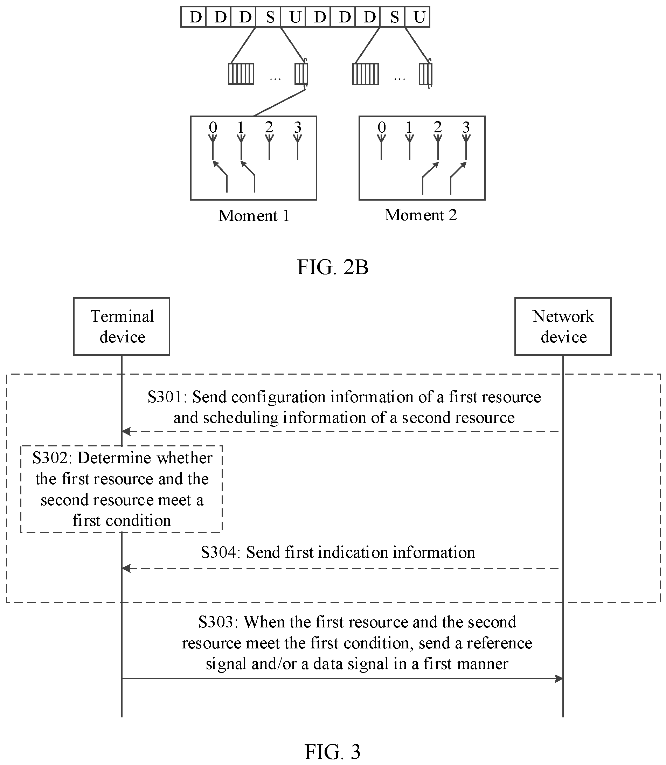

However, when a time-domain interval between a resource configured by the network device for the terminal device and used to send a reference signal and a resource used to send a data signal is relatively small, that is, when a time domain resource used for antenna switching is insufficient for the terminal device to complete antenna switching, the terminal device may need to send a data signal without sufficient time to switch an antenna port when sending a reference signal. For example, if the resource configured by the network device for the terminal device and used to send the reference signal is a last time domain symbol (that is, a time domain symbol corresponding to a dashed box in FIG. 2B) of an S frame, and a next adjacent subframe is a U frame used to send a data signal, after sending the reference signal, the terminal device may not be able to send the data signal on an initial time domain resource in the U frame used to send the data signal. Consequently, a data signal transmission error occurs, and the network device cannot correctly demodulate the data signal in the U frame, resulting in a relatively low probability that the network device correctly demodulates the data signal.

For example, refer to FIG. 2B. The scenario shown in FIG. 2A is used as an example. The terminal device measures signals of four antenna ports, and two antenna ports selected to send the data signal to the network device are respectively the antenna port 0 and the antenna port 1. That is, the antenna ports used by the terminal device to send the data signal are the same as the antenna ports used to send the reference signal through the resource 1.

After sending a reference signal to the network device at a moment 1 through the antenna port 0 and the antenna port 1, the terminal device may send a data signal to the network device through the current ports without performing antenna switching. After sending a reference signal to the network device at a moment 2 through the antenna port 2 and the antenna port 3, the terminal device needs to perform antenna switching, to send a data signal to the network device through the antenna port 0 and the antenna port 1. However, if a time domain resource corresponding to the moment 2 is the last time domain symbol of the S frame in FIG. 2B, switching the antenna ports to the antenna port 0 and the antenna port 1 by the terminal device may occupy a time domain resource (that is, the initial time domain resource in the U frame after the S frame) used to send the data signal. Consequently, the network device may fail to correctly demodulate the data signal.

In view of this, in this embodiment of this application, when the terminal device determines that the first resource for sending the reference signal and the second resource for sending the data signal meet a first condition, the terminal device may send the reference signal and the data signal to the network device through a same port; or the terminal device may send the reference signal and the data signal to the network device through different ports, but does not perform resource mapping on a portion of the first resource and/or the second resource; or the terminal device may not send the reference signal but send the data signal only; or the terminal device may not send the data signal but send the reference signal only, so that the network device can correctly demodulate the data signal.

The following describes the method provided in this embodiment of this application with reference to the accompanying drawings.

An embodiment of this application provides a first communication method. FIG. 3 is a flowchart of the method. The method may be applied to the application scenarios shown in FIG. 1A to FIG. 1C. For example, a network device in the method is the network device in the application scenarios shown in FIG. 1A to FIG. 1C, and a terminal device in the method is the terminal device in the application scenarios shown in FIG. 1A to FIG. 1C. In this embodiment of this application, all optional steps are represented by dashed lines.

S301: The network device sends configuration information of a first resource and scheduling information of a second resource to the terminal device. Correspondingly, the terminal device receives the configuration information of the first resource and the scheduling information of the second resource from the network device.

The network device may configure, for the terminal device, one or more resources used to send a reference signal, where the one or more resources used to send an SRS include the first resource described in the following embodiment. In addition, the network device may further configure, for the terminal device, one or more resources used to send a data signal, where the one or more resources used to send a data signal include the second resource described in the following embodiment. The reference signal may be, for example, an uplink reference signal (sounding reference signal, SRS), a demodulation reference signal (demodulation reference signal, DMRS), a CSI-RS, a synchronization signal block (synchronization signal block, SSB), and a timing reference signal (timing reference signal, TRS). The data signal may be, for example, a physical uplink shared channel (physical uplink shared channel, PUSCH) and a physical downlink shared channel (physical downlink shared channel, PDSCH). In this embodiment of this application, an example in which the reference signal is an SRS and the data signal is a PUSCH is used.

After configuring, for the terminal device, one or more resources used to send the SRS and one or more resources used to send the PUSCH, the network device may send, to the terminal device, configuration information of the one or more resources used to send the SRS and scheduling information of the one or more resources used to send the PUSCH.

For example, the network device may send, to the terminal device by using a radio resource control (radio resource control, RRC) reconfiguration message, the configuration information of the one or more resources used to send the SRS. For example, the network device may configure a resource set (resource set). The resource set includes (y/x, y≥x) resources configured by the network device for the terminal device and used to send the SRS, and the network device may further configure a quantity of ports corresponding to each resource, for example, x. x and y are determined by the network device based on a capability parameter (supportedSRS-xTyR) that is of an antenna mode supported by the terminal device and that is reported by the terminal device, where y indicates that a total quantity of receive antennas of the terminal device is y, or indicates that the terminal device has y receiving ports; and x indicates that the terminal device may select x ports from y ports to send a signal.

In addition, the network device may send, to the terminal device by using RRC signaling, media access control control element (media access control control element or medium access control control element, MAC CE) signaling, or downlink control information (downlink control information, DCI) signaling, the scheduling information of the one or more resources used to send the PUSCH. In this embodiment of this application, a resource for sending an SRS may be referred to as an SRS resource for short, and a resource for sending a PUSCH may be referred to as a PUSCH resource for short.

The first resource and the second resource that are configured by the network device for the terminal device may have the following several cases in the time domain:
Case 1: A time domain resource occupied by the second resource overlaps a time domain resource occupied by the first resource, that is, a time domain symbol occupied by the second resource and a time domain symbol occupied by the first resource include a same time domain symbol.
Case 2: The time domain resource occupied by the second resource is adjacent to the time domain resource occupied by the first resource, that is, a 1^{st} time domain symbol occupied by the second resource is adjacent to a last time domain symbol occupied by the first resource.
Case 3: A quantity of time domain symbols between the 1^{st} time domain symbol occupied by the second resource and the last time domain symbol occupied by the first resource is less than Y.
Case 4: A quantity of time domain symbols between the 1^{st} time domain symbol occupied by the second resource and the last time domain symbol occupied by the first resource is greater than or equal to Y.

Y may be, for example, related to a subcarrier spacing. For example, refer to Table 1, which shows a relationship between Y and a subcarrier spacing.

| *µ* | Δ*f* = 2*^{µ}* · 15[KHZ] | *Y*[symbol] |
|---|---|---|
| 0 | 15 | 1 |
| 1 | 30 | 1 |
| 2 | 60 | 1 |
| 3 | 120 | 2 |
| 5 | 480 | 7 |
| 6 | 960 | 14 |

*µ* is a type of a subcarrier spacing, Δ*f* is a value of a subcarrier spacing, and *Y* is a quantity of time domain symbols (symbol).

After the terminal device receives the configuration information of the one or more SRS resources from the network device, and receives the scheduling information of the one or more PUSCH resources from the network device, the terminal device may select a port corresponding to each resource (including the SRS resource and the PUSCH resource). The port has a same meaning as the foregoing antenna port, and the terms "antenna port" and "port" in embodiments of this application may be used interchangeably.

Optionally, the terminal device may measure a signal received by each of the y ports, and select x ports with maximum received energy as ports corresponding to the PUSCH resource. For example, an antenna mode supported by the terminal device is 2T4R. The terminal device may measure signals received by four antenna ports, and select, from the four ports, two ports with maximum received energy as the ports corresponding to the PUSCH resource. In addition, the terminal device may select x ports corresponding to each SRS resource in the following manner:
Manner a: The terminal device randomly selects x ports corresponding to each SRS resource. For example, an antenna mode supported by the terminal device is 2T4R. Four ports included in the terminal device are a port 0, a port 1, a port 2, and a port 3. SRS resources configured by the network device for the terminal device include an SRS resource 1 and an SRS resource 2. The terminal device may randomly select the port 0 and the port 1 from the four ports as transmit ports corresponding to the SRS resource 1, and select the port 2 and the port 3 as ports corresponding to the SRS resource 2.
Manner b: The terminal device selects, for any SRS resource in the resource set, a port that is the same as the PUSCH resource, and a port corresponding to another SRS resource in the resource set is selected from ports, among the y ports, that are not selected by the any SRS resource. Any SRS resource in the resource set may be an SRS resource with a minimum resourceID in the resource set, or an SRS resource with the earliest time domain resource in the resource set, or a 1^{st} SRS resource in the resource set, or an SRS resource with a maximum resourceID in the resource set, or an SRS resource with the latest time domain resource in the resource set, or a last SRS resource in the resource set. For example, an antenna mode supported by the terminal device is 2T4R. Four ports included in the terminal device are a port 0, a port 1, a port 2, and a port 3. SRS resources configured by the network device for the terminal device include an SRS resource 1 and an SRS resource 2. The SRS resource 1 is an SRS resource with a minimum resourceID, and ports corresponding to a PUSCH resource selected by the terminal device are the port 1 and the port 2. In this case, the terminal device may select the port 1 and the port 2 as ports corresponding to the SRS resource 1, and select the port 0 and the port 3 as ports corresponding to the SRS resource 2.

In the foregoing manner a and manner b, different SRS resources correspond to different x ports, and a set of ports corresponding to all SRS resources includes the y ports.

S302: The terminal device determines whether the first resource and the second resource meet a first condition.

The first condition indicates an insufficient time domain resource for antenna switching, that is, a time domain resource between adjacent resources is insufficient for the terminal device to perform antenna switching. Therefore, the terminal device may determine whether the first resource and the second resource meet the first condition based on a time-domain interval between the first resource and the second resource.

Optionally, the terminal device may determine whether the time-domain interval between the first resource and the second resource is less than a first threshold. The first threshold may be determined based on the duration required by the terminal device to perform antenna switching. For example, the first threshold may be the foregoing Y. If the time-domain interval between the first resource and the second resource is less than the first threshold, for example, the time-domain interval between the first resource and the second resource meets the foregoing case 1, case 2, or case 3, it indicates that the terminal device has insufficient time to switch an antenna port after sending the SRS, so that the terminal device occupies a portion of the time domain resources included in the second resource when performing antenna switching. When the terminal device sends the PUSCH to the network device, no resource mapping is performed on a portion of resources in the second resource. In this case, because the network device is not aware of the fact that resource mapping is skipped on a portion of resources in the PUSCH resource sent by the terminal device, the network device cannot correctly demodulate the PUSCH. Therefore, the terminal device may determine that the first resource and the second resource meet the first condition. In this case, the terminal device may perform S303.

If the time-domain interval between the first resource and the second resource is greater than or equal to the first threshold, for example, the time-domain interval between the first resource and the second resource meets the foregoing case 4, it indicates sufficient time for the terminal device to perform antenna switching after sending the SRS, and the terminal device may normally perform resource mapping when sending the PUSCH to the network device. Therefore, the terminal device may determine that the first resource and the second resource do not meet the first condition. Optionally, if antenna switching is not required to send the PUSCH after sending the SRS, that is, a port used by the terminal device to send the SRS is the same as a port used to send the PUSCH, it indicates that when the terminal device sends the PUSCH to the network device, resource mapping may be normally performed. Therefore, the terminal device may determine that the first resource and the second resource do not meet the first condition. For example, the first resource is the SRS resource 1 in the foregoing manner b, and a port corresponding to the SRS resource 1 is the same as a port corresponding to the PUSCH resource. After sending the SRS to the network device on the SRS resource 1 through the port 1 and the port 2, the terminal device may send the PUSCH to the network device on the second resource through the ports (that is, the port 1 and the port 2) corresponding to the SRS resource 1. Therefore, the terminal device may determine that the first resource and the second resource do not meet the first condition.

S303: The terminal device sends a reference signal and/or a data signal to the network device in a first manner. Correspondingly, the network device receives the reference signal and/or the data signal from the terminal device.

The first manner may include but is not limited to the following manners:
Manner 1: The SRS and the PUSCH are sent to the network device through a same antenna port. For example, the terminal device may send the SRS and the PUSCH to the network device through an antenna port used to send the SRS (that is, an antenna port corresponding to the first resource), or the terminal device may send the SRS and the PUSCH to the network device through an antenna port used to send the PUSCH (that is, an antenna port corresponding to the second resource).
Manner 2: The SRS and the PUSCH are sent to the network device through different antenna ports, and resource mapping is skipped on a portion of the first resource for sending the SRS and/or a portion of the second resource for sending the PUSCH, that is, a portion of the first resource do not carry the SRS, and/or a portion of the second resource do not carry the PUSCH. For example, the terminal device may send the SRS through the antenna port corresponding to the first resource, and send the PUSCH through the antenna port corresponding to the second resource, but does not perform resource mapping on a portion of the first resource, and/or does not perform resource mapping on a portion of the second resource.
Manner 3: The PUSCH is sent and the SRS is not sent, that is, the terminal device sends only the PUSCH to the network device. For example, the terminal device may send the PUSCH to the network device through the antenna port corresponding to the second resource, and does not send the SRS to the network device through the antenna port corresponding to the first resource.
Manner 4: The SRS is sent and the PUSCH is not sent, that is, the terminal device sends only the SRS to the network device. For example, the terminal device may send the SRS to the network device through the antenna port corresponding to the first resource, and does not send the PUSCH to the network device through the antenna port corresponding to the second resource.

Optionally, the first manner may be indicated by the network device, or may be predefined in a protocol. Alternatively, a plurality of manners may be predefined in a protocol, and the network device indicates a specific manner to be used. The following describes several methods for determining the first manner by the terminal device by using examples.

Method 1: The network device may configure, by using RRC signaling, at least one of the foregoing four manners for the terminal device, and indicate, by using DCI signaling, a specific manner in the at least one manner to be used by the terminal device. The terminal device may determine the first manner based on the DCI signaling.

Method 2: The network device may configure, by using RRC signaling, any one of the foregoing four manners for the terminal device, and the terminal device considers the manner as the first manner by default.

Method 3: The network device configures, by using RRC signaling, at least one of the foregoing four manners for the terminal device, and activates any one of the at least one manner by using a MAC CE. The terminal device considers the activated manner as the first manner by default.

Method 4: The network device configures, by using RRC signaling, at least one of the foregoing four manners for the terminal device, activates at least one of the at least one manner by using a MAC CE, and indicates, by using DCI signaling, a specific manner in the at least one manner to be used by the terminal device. The terminal device may determine the first manner based on the DCI signaling.

Method 5: A protocol specifies any one of the foregoing four manners, and the terminal device considers the manner as the first manner by default.

Method 6: A protocol specifies any one of the foregoing four manners, and the network device indicates, by using DCI signaling, whether the terminal device uses the manner. The terminal device may determine, by using the DCI signaling, whether to determine the manner as the first manner.

Method 7: A protocol specifies at least one of the foregoing four manners, and the network device indicates, by using DCI signaling, whether the terminal device uses the at least one manner. In addition, if the DCI signaling indicates that the terminal device uses the at least one manner, the DCI may further indicate a specific manner in the at least one manner to be used by the terminal device. The terminal device may determine, by using the DCI signaling, whether to determine the manner as the first manner.

Optionally, if the first manner is indicated by the network device, before S301 is performed, S304 may be further performed, that is, the network device sends first indication information to the terminal device. Correspondingly, the terminal device receives the first indication information from the network device. The first indication information indicates the foregoing first manner. The first indication information may be, for example, the DCI signaling in the foregoing method 1. Alternatively, the first indication information may be the RRC signaling in the foregoing method 2. Alternatively, the first indication information may be the MAC CE in the foregoing method 3. Alternatively, the first indication information may be the DCI signaling in the foregoing method 4. Alternatively, the first indication information may be the DCI signaling in the foregoing method 6. Alternatively, the first indication information may be the DCI signaling in the foregoing method 7. The first indication information is not limited in this embodiment of this application.

S304 may be performed before S302 and S303, or may be performed after S302 and S303, or may be performed simultaneously with S302 and S303. A sequence of performing S304, S302, and S303 is not limited in this embodiment of this application.

Optionally, if the first manner is the foregoing manner 2, the network device may further send second indication information to the terminal device, to indicate a location of a time-frequency domain resource, at which resource mapping is skipped, in the first resource and/or the second resource. Optionally, the second indication information may be, for example, a rate matching pattern (rateMatch pattern), and the rate matching pattern may include one or more of the following parameters:
a rate matching pattern ID (identifier), used to uniquely identify a rate matching pattern;
a time domain resource location, used to identify a time domain location, at which resource mapping is skipped, in the first resource and/or the second resource;
a frequency domain resource location, used to identify a frequency domain location, at which resource mapping is skipped, in the first resource and/or the second resource; or
a quantity of time domain symbols, used to identify a quantity of time domain symbols, on which resource mapping is skipped, in the first resource and/or the second resource. A start location of a symbol included in the quantity of time domain symbols may be a time domain symbol occupied by the first resource, or may be a time domain symbol occupied by the second resource. For example, if the second indication information indicates a location at which resource mapping is skipped in the first resource, the start location is the time domain symbol occupied by the first resource. If the second indication information indicates a location at which resource mapping is skipped in the second resource, the start location is the time domain symbol occupied by the second resource.

Optionally, if the second indication information only indicates a location of a time-frequency domain resource location, at which resource mapping is skipped, in the second resource, the rate matching pattern may further indicate a time-frequency domain location, at which resource mapping is skipped, in each PUSCH resource in one or more PUSCH resources other than the second resource. For example, the rate matching pattern may further include a pattern type, and the pattern type may be used to identify a PUSCH resource on which resource mapping avoidance needs to be performed. "Performing resource mapping avoidance" indicates that a time-domain interval between the PUSCH resource and an adjacent SRS resource is less than the first threshold, and resource mapping does not need to be performed on some time domain symbols occupied by the PUSCH resource. For example, that resource mapping avoidance needs to be performed on a PUSCH resource 1 indicates that resource mapping is skipped on some time domain symbols in the PUSCH resource 1.

For example, a type 0 indicates that resource mapping needs to be performed on all PUSCH resources, that is, resource mapping avoidance does not need to be performed on all PUSCH resources. A type 1 indicates that resource mapping avoidance needs to be performed on all PUSCH resources, that is, resource mapping is skipped on some time domain symbols in all PUSCH resources. A type 2 indicates that resource mapping avoidance does not need to be performed on PUSCH resources adjacent to some SRS resources in the resource set, and resource mapping avoidance needs to be performed on PUSCH resources adjacent to all SRS resources in the resource set other than those SRS resources. Any SRS resource in the resource set may be an SRS resource with a minimum resourceID in the resource set, or an SRS resource with the earliest time domain resource in the resource set, or a 1^{st} SRS resource in the resource set, or an SRS resource with a maximum resourceID in the resource set, or an SRS resource with the latest time domain resource in the resource set, or a last SRS resource in the resource set.

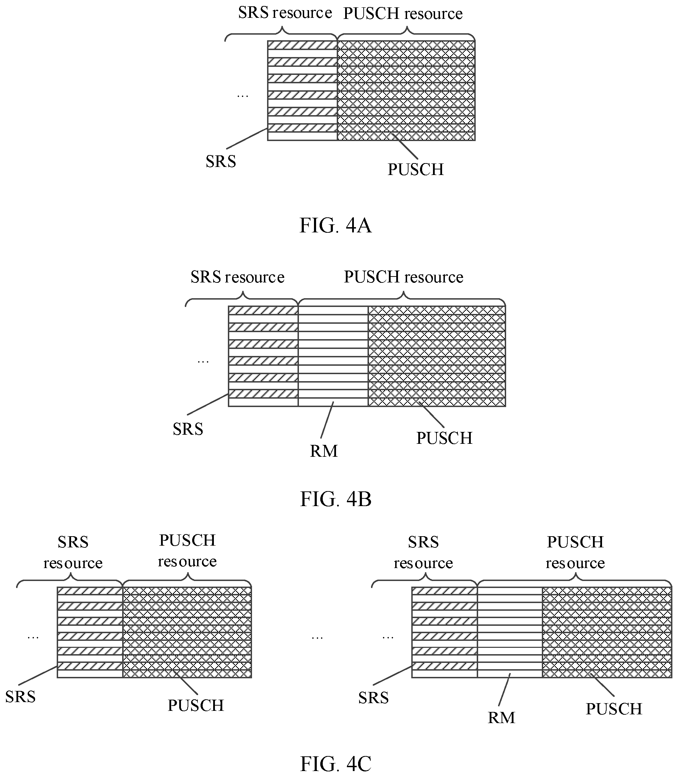

For example, refer to FIG. 4A to FIG. 4C, which show pattern types of several rate matching patterns according to an embodiment of this application. In FIG. 4A to FIG. 4C, RM (rate matching) is a time domain symbol on which resource mapping is skipped, an SRS resource is used to send an SRS, and a PUSCH resource is used to send a PUSCH.

FIG. 4A shows a rate matching pattern corresponding to the type 0, FIG. 4B shows a rate matching pattern corresponding to the type 1, and FIG. 4C shows a rate matching pattern corresponding to the type 2. The rate matching patterns shown in FIG. 4A and FIG. 4B each include one rate matching pattern, which indicates that resource mapping is performed on all PUSCH resources based on the rate matching pattern. For example, a rate matching pattern whose type is 0 includes one rate matching pattern and does not include RM, which indicates that resource mapping avoidance is skipped on all PUSCH resources. A rate matching pattern whose type is 1 includes one rate matching pattern and includes RM, which indicates that resource mapping avoidance is performed on all PUSCH resources. The rate matching pattern shown in FIG. 4C includes a plurality of rate matching patterns. That is, the network device configures a corresponding rate matching pattern for each PUSCH resource, and resource mapping may be performed on each PUSCH resource based on the corresponding rate matching pattern. For example, in FIG. 4C, a PUSCH resource corresponding to a first moment does not include RM, and a PUSCH resource corresponding to a second moment includes RM, which indicates that resource mapping avoidance is skipped on the PUSCH resource corresponding to the first moment, and resource mapping avoidance needs to be performed on the PUSCH resource corresponding to the second moment.

After receiving the rate matching pattern, the terminal device may determine a mapping manner of the PUSCH resource based on the rate matching pattern. For example, the rate matching pattern includes a pattern type. If the pattern type is the type 0, the terminal device does not perform resource mapping avoidance on all PUSCH resources, that is, the terminal device performs resource mapping on all time domain symbols occupied by all PUSCH resources.

If the pattern type is the type 1, the terminal device performs resource mapping avoidance on all PUSCH resources. Optionally, when the pattern type is the type 1, if the rate matching pattern includes information that indicates a location of a time-frequency domain resource , at which resource mapping is skipped (for example, includes the foregoing time domain resource location and/or frequency domain resource location), the terminal device may not perform an operation of determining whether a PUSCH resource and an adjacent SRS resource meet the first condition, and may directly determine, based on the time-frequency domain resource location that indicates that resource mapping is skipped, a time domain symbol, on which resource mapping is skipped, in the PUSCH resource. If the rate matching pattern does not include the information that indicates a location of a time-frequency domain resource , at which resource mapping is skipped, the terminal device may determine whether the PUSCH resource and the adjacent SRS resource meet the first condition. If the first condition is met, the terminal device may avoid performing resource mapping on Y time domain symbols adjacent to a last time domain symbol occupied by the adjacent SRS resource. That is, among the time domain symbols occupied by the PUSCH resource, resource mapping is skipped on time domain symbols whose interval from the last time domain symbol occupied by the SRS resource adjacent to the PUSCH resource is less than Y. For example, a quantity of time domain symbols included in the first threshold is 2, and a 1^{st} time domain symbol occupied by the second resource is adjacent to a last time domain symbol occupied by the first resource, that is, a time-domain interval between the first resource and the second resource is 0. Therefore, the terminal device does not perform resource mapping on the first two time domain symbols occupied by the second resource. If a total quantity of time domain symbols occupied by the second resource is 14, the terminal device performs resource mapping only on third to fourteenth time domain symbols occupied by the second resource.

If the pattern type is the type 2, the terminal device may determine whether to perform resource mapping avoidance based on a rate matching pattern corresponding to each PUSCH resource. FIG. 4C is used as an example. When sending a PUSCH at a first moment, the terminal device does not perform resource mapping avoidance on a PUSCH resource corresponding to the first moment, and when sending a PUSCH at a second moment, the terminal device performs resource mapping avoidance on a PUSCH resource corresponding to the second moment. For a manner of performing resource mapping avoidance on the PUSCH resource, refer to the manner in which the terminal device performs resource mapping avoidance on the PUSCH resource when the pattern type is the type 1. Details are not described herein again.

In the foregoing technical solution, when the terminal device sends the reference signal and/or the data signal to the network device, if the time domain resource used for antenna switching is insufficient, the terminal device may not perform antenna switching, that is, send the reference signal and the data signal to the network device through a same port, so that the network device can correctly demodulate the data signal. Alternatively, the terminal device may send the reference signal and the data signal through different ports, and may not perform resource mapping on a portion of the first resource and/or the second resource when sending the reference signal and the data signal, that is, the portion of resource is not used to send the reference signal and/or the data signal, so that the network device can correctly demodulate the data signal. Alternatively, the terminal device may send the data signal to the network device, and may not send the reference signal, so that the network device can correctly demodulate the data signal, and help improve utilization of the uplink subframe. Alternatively, the terminal device may send the reference signal to the network device, and may not send the data signal, so as to reduce the probability that the network device incorrectly demodulates the data signal, and help improve the accuracy of obtaining channel state information of all downlink ports by the network device.

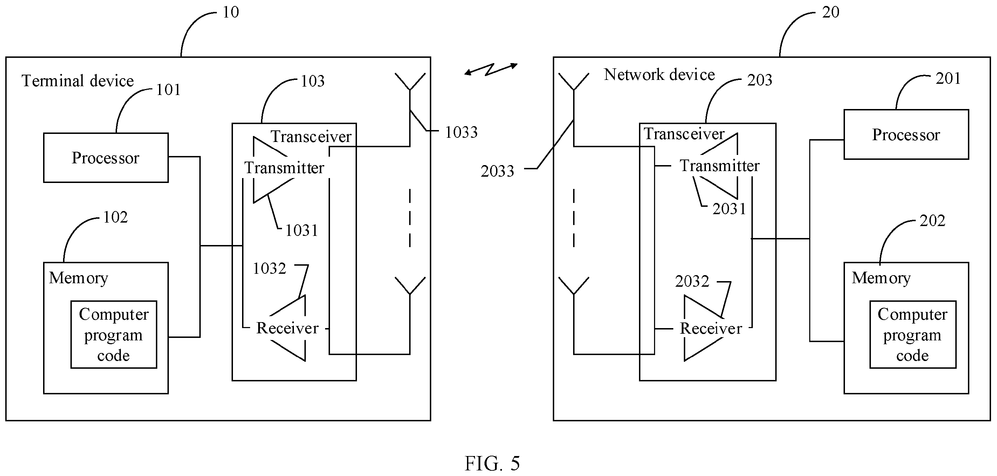

FIG. 5 is a diagram of a structure of a terminal device 10 and a network device 20 according to an embodiment of this application. The terminal device 10 may be the terminal device described in the embodiment shown in FIG. 3, and is configured to implement the method corresponding to the terminal device in the foregoing method embodiment. The network device 20 may be the network device described in the embodiment shown in FIG. 3, and is configured to implement the method corresponding to the network device in the foregoing method embodiment.

The terminal device 10 includes at least one processor (in FIG. 5, an example in which one processor 101 is included is used for description). The processor 101 may be configured for internal processing of the apparatus, to implement a specific control processing function. Optionally, different processors may be independent components, may be located at different physical locations, or may be located on different integrated circuits. Optionally, different processors may be integrated into one or more processors, for example, integrated into one or more integrated circuits.

Optionally, the terminal device 10 further includes one or more memories (in FIG. 5, an example in which one memory 102 is included is used for description), configured to store instructions. Optionally, the memory 102 may further store data. The processor 101 and the memory 102 may be separately disposed, or may be integrated together.

The terminal device 10 may further include at least one transceiver (in FIG. 5, an example in which one processor 101 is included is used for description). The transceiver may be configured to send information to another apparatus or receive information from another apparatus. The transceiver may be referred to as a transceiver machine, a transceiver circuit, an input/output interface, or the like, and is configured to implement a transceiver function of the terminal device 10 through an antenna. Optionally, the transceiver includes a transmitter (transmitter) 1031, a receiver (receiver) 1032, and an antenna 1033. For example, the transmitter 1031 may be configured to generate a radio frequency (radio frequency) signal from a baseband signal, the receiver 1032 may be configured to convert a radio frequency signal into a baseband signal, and the antenna 1033 may be configured to transmit/receive a radio frequency signal.

The processor 101, the memory 102, and the transceiver 103 are connected to each other through a communication line. The communication line may include a path for transmitting information between the foregoing components.

The processor 101 may include a general-purpose central processing unit (central processing unit, CPU), a microprocessor, an application specific integrated circuit (application specific integrated circuit, ASIC), or one or more integrated circuits configured to control program execution of solutions of this application.

The memory 102 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures and capable of being accessed by a computer, but is not limited thereto. The memory 102 may exist independently, and is connected to the processor 101 through the communication line. Alternatively, the memory 102 may be integrated with the processor 101.

The memory 102 is configured to store computer-executable instructions for performing the solutions in this application, and the processor 101 controls execution of the computer-executable instructions. The processor 101 is configured to execute the computer-executable instructions stored in the memory 102, to implement the steps performed by the terminal device described in the embodiment shown in FIG. 3. Optionally, the computer-executable instructions in embodiments of this application may also be referred to as application program code or computer program code or instructions. This is not specifically limited in embodiments of this application.

During specific implementation, in an embodiment, the terminal device 10 may include a plurality of processors. Each of the processors may be a single-core (single-CPU) processor, or may be a multi-core (multi-CPU) processor. The processor herein may be one or more devices, circuits, and/or processing cores configured to process data (for example, computer program instructions).

The network device 20 includes at least one processor (in FIG. 5, an example in which one processor 201 is included is used for description), at least one transceiver (in FIG. 5, an example in which one transceiver 203 is included is used for description), and at least one memory (in FIG. 5, an example in which one memory 202 is included is used for description). The transceiver 203 may be configured to send information to another apparatus or receive information from another apparatus. The transceiver may be referred to as a transceiver machine, a transceiver circuit, an input/output interface, or the like, and is configured to implement a transceiver function of the network device 20 through an antenna. Optionally, the transceiver includes a transmitter 2031, a receiver 2032, and an antenna 2033. For example, the transmitter 2031 may be configured to generate a radio frequency (radio frequency) signal from a baseband signal, the receiver 2032 may be configured to convert a radio frequency signal into a baseband signal, and the antenna 2033 may be configured to transmit/receive a radio frequency signal.

The processor 201, the memory 202, and the transceiver 203 are connected to each other through a communication line. In addition, for related descriptions of the processor 201, the memory 202, and the transceiver 203, refer to the descriptions of the processor 101, the memory 102, and the transceiver 103 in the terminal device 10. Details are not described herein again.

It may be understood that the structures shown in FIG. 5 do not constitute specific limitations on the terminal device 10 and the network device 20. For example, in some other embodiments of this application, the terminal device 10 or the network device 20 may include more or fewer components than those shown in the figure, or some components may be combined, or some components may be split, or the components may be differently arranged. The components shown in the figure may be implemented by hardware, software, or a combination of software and hardware.

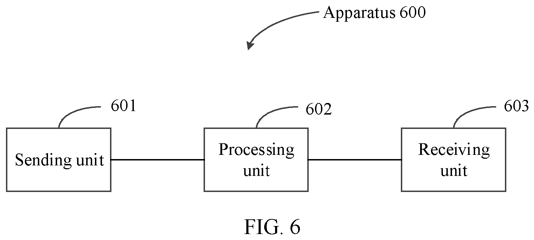

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, refer to FIG. 6. When each functional module is obtained through division based on each corresponding function, FIG. 6 is a diagram of an apparatus. The apparatus 600 may be the terminal device or the network device in the foregoing method embodiments, or may be a chip in the terminal device or the network device. The apparatus 600 includes a sending unit 601, a processing unit 602, and a receiving unit 603.

It should be understood that the apparatus 600 may be configured to implement the steps performed by the terminal device or the network device in the communication method in embodiments of this application. For related features, refer to any one of embodiments shown in FIG. 3. Details are not described herein again.

Optionally, functions/implementation processes of the sending unit 601, the receiving unit 603, and the processing unit 602 in FIG. 6 may be implemented by the processor 101 in FIG. 5 invoking the computer-executable instructions stored in the memory 102, or may be implemented by the processor 201 in FIG. 5 invoking the computer-executable instructions stored in the memory 202. Alternatively, a function/implementation process of the processing unit 602 in FIG. 6 may be implemented by the processor 101 in FIG. 5 invoking the computer-executable instructions stored in the memory 102, or may be implemented by the processor 201 in FIG. 5 invoking the computer-executable instructions stored in the memory 202.

Optionally, when the apparatus 600 is a chip or a circuit, the functions/implementation processes of the sending unit 601 and the receiving unit 603 may alternatively be implemented by a pin, a circuit, or the like.

This application further provides a computer-readable storage medium. The computer-readable storage medium stores a computer program or instructions. When the computer program or the instructions are run, the method performed by the terminal device or the network device in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or part of the technical solutions may be implemented in a form of a software product. The computer software product is stored in a storage medium, and includes several instructions for instructing a computer device (which may be a personal computer, a server, a network device, or the like) to perform all or part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the terminal device or the network device in any one of the foregoing method embodiments.

An embodiment of this application further provides a processing apparatus, including a processor and an interface. The processor is configured to perform the method performed by the terminal device or the network device in any one of the foregoing method embodiments.

All or some of the foregoing embodiments may be implemented by using software, hardware, firmware, or any combination thereof. When software is used to implement embodiments, all or part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor so that the processor may read information from the storage medium and write information to the storage medium. Alternatively, the storage medium may be integrated into a processor. The processor and the storage medium may be disposed in an ASIC, and the ASIC may be disposed in a terminal device or a network device. Optionally, the processor and the storage medium may be alternatively disposed in different components of the terminal device or the network device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the terminal device and the network device may perform some or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, applied to a terminal device, wherein the method comprises:
sending a reference signal and/or a data signal to a network device in a first manner when a first resource and a second resource meet a first condition, wherein the first condition indicates an insufficient time domain resource for antenna switching, the first resource is a time-frequency domain resource for sending the reference signal, and the second resource is a time-frequency domain resource for sending the data signal, and
the first manner comprises one or more of the following:
sending the reference signal and the data signal through a same port;
sending the reference signal and the data signal through different ports, and skipping performing resource mapping on a portion of the first resource and/or the second resource;
sending the data signal without sending the reference signal; or
sending the reference signal without sending the data signal.

2. The method according to claim 1, wherein that the first resource and the second resource meet the first condition comprises:
a time-domain interval between the first resource and the second resource is less than a first threshold.

3. The method according to claim 1 or 2, wherein the first manner is predefined in a protocol, or is indicated by the network device by using first indication information, and the first indication information comprises one or more of radio resource control RRC, a media access control control element MAC-CE, and downlink control information DCI.

4. The method according to any one of claims 1 to 3, wherein the method further comprises:
receiving second indication information from the network device, wherein the second indication information indicates a location of a time-frequency domain resource, at which resource mapping is skipped, in the first resource and/or the second resource.

5. The method according to claim 4, wherein the second indication information comprises a rate matching pattern.

6. The method according to any one of claims 1 to 5, wherein the method further comprises:
receiving configuration information of the first resource and scheduling information of the second resource from the network device.

7. A communication method, applied to a network device, wherein the method comprises:
sending first indication information to a terminal device, wherein the first indication information indicates to send a reference signal and/or a data signal in a first manner when a first resource and a second resource meet a first condition, the first condition indicates that an insufficient time domain resource for antenna switching, the first resource is a time-frequency domain resource for sending the reference signal, and the second resource is a time-frequency domain resource for sending the data signal, and
the first manner comprises one or more of the following:
sending the reference signal and the data signal through a same port;
sending the reference signal and the data signal through different ports, and skipping performing resource mapping on a portion of the first resource and/or the second resource;
sending the data signal, without sending the reference signal; or
sending the reference signal without sending the data signal.

8. The method according to claim 7, wherein that the first resource and the second resource meet the first condition comprises:
a time-domain interval between the first resource and the second resource is less than or equal to a first threshold.

9. The method according to claim 7 or 8, wherein the first indication information comprises one or more of radio resource control RRC, a media access control control element MAC-CE, and downlink control information DCI.

10. The method according to any one of claims 7 to 9, wherein the method further comprises:
sending second indication information to the terminal device, wherein the second indication information indicates a location of a time-frequency domain resource at which resource mapping is skipped, in the first resource and/or the second resource.

11. The method according to claim 10, wherein the second indication information comprises a rate matching pattern.

12. The method according to any one of claims 7 to 11, wherein the method further comprises:
sending resource configuration information of the first resource and resource scheduling information of the second resource to the terminal device.

13. A communication system, comprising a terminal device configured to perform the method according to any one of claims 1 to 6, and a network device configured to perform the method according to any one of claims 7 to 12.

14. A communication apparatus, comprising a processor and a memory, wherein the memory is coupled to the processor, and the processor is configured to invoke computer instructions in the memory to perform the method according to any one of claims 1 to 6, or perform the method according to any one of claims 7 to 12.

15. A computer-readable storage medium, wherein the computer-readable storage medium stores computer-executable instructions, and when the computer-executable instructions are invoked by a computer, the method according to any one of claims 1 to 6 or the method according to any one of claims 7 to 12 is performed.

16. A computer program product, wherein the computer program product comprises a computer program, and when the computer program is run on a computer, the computer is enabled to perform the method according to any one of claims 1 to 6, or the computer is enabled to perform the method according to any one of claims 7 to 12.

17. A computer program, comprising program code, wherein when a computer runs the program code, the program code performs the method according to any one of claims 1 to 6, or the program code performs the method according to any one of claims 7 to 12.

18. A chip, wherein the chip is coupled to a memory, and is configured to read and execute program instructions stored in the memory, to implement the method according to any one of claims 1 to 6 or the method according to any one of claims 7 to 12.
